Europäisches Patentamt

European Patent Office

Office européen des brevets

(19)

(11) Veröffentlichungsnummer : **0 045 383**
**B1**

(12) **EUROPÄISCHE PATENTSCHRIFT**

(45) Veröffentlichungstag der Patentschrift :
14.09.83

(21) Anmeldenummer : 81105248.9

(22) Anmeldetag : 07.07.81

(51) Int. Cl.³ : **C 09 J 3/16, C 08 G 69/36**

(54) Schmelzkleber für die Verklebung von Textilien.

(30) Priorität : 31.07.80 DE 3029040

(43) Veröffentlichungstag der Anmeldung :
10.02.82 Patentblatt 82/06

(45) Bekanntmachung des Hinweises auf die Patenterteilung : 14.09.83 Patentblatt 83/37

(84) Benannte Vertragsstaaten :
AT BE CH DE FR GB IT LI LU NL

(56) Entgegenhaltungen :
DE A 2 534 121
DE A 2 658 370
DE A 2 904 508
FR A 1 442 099
FR A 2 163 643
GB A 1 136 250
US A 3 637 551
US A 3 639 313

CHEMICAL ABSTRACTS, Band 74, 1971, Seite 15,
Nr. 32171a Columbus, Ohio, U.S.A.

CHEMICAL ABSTRACTS, Band 88, Nr. 10, 6. März
1978, Seite 22, Nr. 62917e Columbus, Ohio, U.S.A.

Die Akte enthält technische Angaben, die nach dem
Eingang der Anmeldung eingereicht wurden und die
nicht in dieser Patentschrift enthalten sind.

(73) Patentinhaber : SCHERING AKTIENGESELLSCHAFT
Berlin und Bergkamen
Waldstrasse 14 Postfach 1540
D-4619 Bergkamen (DE)

(72) Erfinder : Drawert, Manfred, Dr. Dipl.-Chem.
Alte Kreisstrasse 13
D-5758 Fröndenberg (DE)
Erfinder : Imöhl, Wolfgang, Dr. Dipl.-Chem.
Bergpfad 43
D-4750 Unna (DE)

EP 0 045 383 B1

## Schmelzkleber für die Verklebung von Textilien

Die Erfindung betrifft Schmelzkleber auf Basis von Polyamiden, die für die Verklebung von Textilien miteinander oder mit anderen Materialien geeignet sind.

Aus einer Reihe von deutschen Offenlegungsschriften (z. B. DE-A 15 94 233, DE-A 19 39 758, DE-A 22 04 492, DE-A 22 09 035, DE-A 23 24 160) sind bereits Co-Polyamide bekannt, welche für die Verklebung von Textilien eingesetzt werden und welche als wesentlichen Bestandteil 11-Aminoundecansäure oder Laurinlactam enthalten. Die auf Basis dieser Rohstoffe hergestellten Co-Polyamide weisen noch gewisse Mängel, wie z. B. häufig schlechte Naßreißfestigkeiten nach dem Reinigungs- bzw. Waschprozeß sowie unzureichende Klebwerte bei niedrigem Erweichungspunkt des Schmelzklebers auf.

In der DE-A 22 61 525 werden Mischpolymere beschrieben, welche neben einer Polymethylen-ω-aminosäure und einem Polymethylendiamin noch mindestens drei unterschiedliche Polymethylendisäuren enthalten. Diese Mischpolymeren sind entsprechend ihrem Einsatzzweck speziell auf große Löslichkeiten ausgerichtet.

Aus der DE-A 21 47 205 ist ein Kleber zum Verkleben von Textilien bekannt, der aus einer dimeren Fettsäure, einer aliphatischen Co-Dicarbonsäure und einem Amingemisch, bestehend aus Hexamethylendiamin und Xylylendiamin oder Isophorondiamin, hergestellt wird. Auch diese Kleber weisen noch keine befriedigenden Reißfestigkeiten auf.

Mit diesen bekannten Polyamiden auf Basis von dimerer Fettsäure bzw. mit Polyamiden auf Basis von Caprolaktam erhält man Verklebungen mit unbefriedigender Beständigkeit gegenüber halogenierten Kohlenwasserstoffen oder Waschlaugen. Bei der Verklebung von Textilien muß aber die Naßreißfestigkeit hohe Werte aufweisen, da beim Reinigungsprozeß die Verklebung starken mechanischen Belastungen ausgesetzt ist. Aus verarbeitungstechnischen Gründen ist außerdem im allgemeinen ein niedriger Erweichungspunkt der Textilkleber erwünscht.

Ein Weg, Textilkleber auf Basis dimerer Fettsäuren mit guter Beständigkeit gegenüber halogenierten Kohlenwasserstoffen oder Waschlaugen zu erhalten, wird in der DE-A 25 34 121 und der DE-A 26 15 765 beschrieben.

Gegenstand der DE-A 25 34 121 ist die Verwendung von Polyamiden mit Schmelzviskositäten (gemessen bei 220 °C) von 25 bis 150 Pa · s, bestehend aus :

a) dimerisierter Fettsäure mit einem Gehalt von 70 Gew.-% bis 100 Gew.-% an dimerer Fettsäure mit Monocarbonsäuren, die 12-22 Kohlenstoffatome aufweisen, wobei das Gesamtgemisch bis zu 50 Gew.-% an den Monocarbonsäuren betragen kann, und

b) einer aliphatischen unverzweigten Co-Dicarbonsäure mit 6-13 Kohlenstoffatomen,

wobei das Verhältnis der Carbonsäuren gemäß a) zu Carbonsäuren gemäß b) 0,05 : 1 bis 5 : 1, bezogen auf Carboxylgruppen, beträgt, und bestehend aus einer der unter a) und b) genannten Säuren im wesentlichen äquivalenten Menge eines

c) aliphatischen unverzweigten diprimären Diamins mit 6-12 Kohlenstoffatomen und aus

d) Caprolaktam und bzw. oder ε-Aminocapronsäure, wobei pro Mol Carboxylgruppen der unter a) und b) genannten Säuren 0,5-1,5 Mol Caprolaktam und bzw. oder ε-Aminocapronsäure eingesetzt werden, für die Verklebung von Textilien.

Gegenstand der DE-A 26 15 765 ist die Verwendung von Polyamiden für die Verklebung von Textilien mit Schmelzviskositäten (gemessen bei 220 °C) von 25-150 Pa · s, welche gemäß DE-A 25 34 121 hergestellt worden sind aus :

a1) dimerisierter Fettsäure bzw. deren Ester mit einem Gehalt von 70 Gew.-% bis 100 Gew.-% an dimerer Fettsäure,

a2) mit Monocarbonsäuren bzw. deren Ester, die 12-22 Kohlenstoffatome aufweisen, wobei das Gesamtgemisch bis zu 50 Gew.-% an den Monocarbonsäuren bzw. deren Ester betragen kann, und

b) einer aliphatischen unverzweigten Co-Dicarbonsäure bzw. deren Ester mit 6-13 Kohlenstoffatomen,

wobei das Verhältnis der Carbonsäuren bzw. deren Ester gemäß a) zu Carbonsäuren bzw. deren Ester gemäß b) 0,05 : 1 bis 5 : 1, bezogen auf Carboxylgruppen bzw. Estergruppen, beträgt, und bestehend aus einer der unter a) und b) genannten Säuren bzw. deren Ester im wesentlichen äquivalenten Menge eines

c) aliphatischen unverzweigten diprimären Diamins mit 6-12 Kohlenstoffatomen und aus

d) Caprolaktam und bzw. oder ε-Aminocapronsäure, wobei pro Mol Carboxylgruppen bzw. Estergruppen der unter a) und b) genannten Säure und bzw. oder ε-Aminocapronsäure eingesetzt worden sind, welche dadurch gekennzeichnet sind, daß als Komponente a2) Monocarbonsäuren, welche weniger als 12 C-Atome aufweisen, bzw. deren Ester verwendet werden.

Der Erfindung liegt die Aufgabe zugrunde, die Nachteile des Standes der Technik zu überwinden und Textilkleber auf Basis von Co-Polyamiden mit hoher Naßreißfestigkeit, Beständigkeit gegenüber halogenierten Kohlenwasserstoffen und Waschlaugen mit Temperaturen von 60-95 °C zu finden.

Gegenstand der vorliegenden Erfindung ist die Verwendung von Polyamiden mit Schmelzviskositäten (gemessen bei 220 °C) von 25 bis 150 Pa · s, welche hergestellt werden aus :

a) dimerisierter Fettsäure mit einem Gehalt von 70 Gew.-% bis 100 Gew.-% an dimerer Fettsäure mit Monocarbonsäuren, die 2-22 Kohlenstoffatome aufweisen, wobei das Gesamtgemisch bis zu 50 Äquiv.-% an den Monocarbonsäuren betragen kann, und

b) mindestens einer aliphatischen unverzweigten Co-Dicarbonsäure mit 6-13 Kohlenstoffatomen,

wobei das Verhältnis der Carbonsäuren gemäß a) zu Carbonsäure gemäß b) 0,05 : 1 bis 5 : 1, bezogen auf Carboxygruppen, beträgt, und bestehend aus einer der unter a) und b) genannten Säuren im wesentlichen äquivalenten Menge eines

c) aliphatischen unverzweigten Diamins mit 6-12 Kohlenstoffatomen und aus
d) Caprolaktam und/oder ε-Aminocapronsäure,

wobei pro Mol Carboxylgruppen der unter a) und b) genannten Säuren 0,5 bis 1,5 Mol, insbesondere 0,8 bis 1,2 Mol, Caprolaktam und bzw. oder ε-Aminocapronsäure eingesetzt werden, die dadurch gekennzeichnet sind, daß 5 bis 70 Mol-%, insbesondere 10-50 Mol-%, des Caprolaktams und/oder der ε-Aminocapronsäure gemäß d) durch 11-Aminoundecansäure und/oder 12-Aminoundecansäure und/oder Laurinlaktam ersetzt werden, für die Verklebung von Textilien.

Eine weitere Ausbildung der erfindungsgemäß anzuwendenden Schmelzkleber besteht darin, daß die Carbonsäuren gemäß a) zu Carbonsäuren gemäß b) im Verhältnis von 0,1 : 1 bis 1,0 : 1 verwendet werden.

Eine weitere Ausbildung der erfindungsgemäß anzuwendenden Schmelzkleber besteht darin, daß als Co-Dicarbonsäuren gemäß b) Sebazinsäure und/oder Azelainsäure verwendet werden.

Eine weitere Ausbildung der erfindungsgemäß anzuwendenden Schmelzkleber besteht darin, daß als Diamin gemäß c) Hexamethylendiamin verwendet wird.

Eine besondere Ausbildung der erfindungsgemäß anzuwendenden Schmelzkleber besteht darin, daß als dimerisierte Fettsäure gemäß a) eine solche mit einem Gehalt von mehr als 90 Gew.-% dimerer Fettsäure verwendet wird.

Die erfindungsgemäß anzuwendenden Schmelzkleber, die auf Basis der dimeren Fettsäure, Co-Dicarbonsäuren, Caprolaktam bzw. ε-Aminocapronsäure, Diaminen und 11-Aminoundecansäure und/oder 12-Aminododecansäure und/oder Laurinlaktam aufgebaut sind, zeigen eine gute Beständigkeit gegen halogenierte Kohlenwasserstoffe und insbesondere auch gegen Waschlaugen bei 60 °C (Produkte mit Schmelzpunkten < ca. 120 °C) und teilweise auch (Produkte mit Schmelzpunkten > ca. 120 °C) bei der bisher problematischen Kochwäsche (95 °C).

Die erfindungsgemäßen Produkte zeichnen sich aus durch

1. die sehr guten Anfangsreißfestigkeiten, d. h. Werte vor der Belastung durch den Wasch- bzw. Reinigungsvorgang und durch

2. die sehr hohen Naßreißfestigkeiten, d. h. Werte nach der Reinigung in noch feuchtem Zustand, und durch

3. die ausgezeichneten Zerreißfestigkeitswerte nach der Trocknung, die sogar nach vielen Wasch- bzw. Reinigungscyclen nahezu wieder erreicht werden.

Bei Verwendung von destillierter dimerer Fettsäure werden Schmelzkleber mit verbesserter Farbzahl erhalten. Andererseits ist die Verwendung von handelsüblicher technischer polymerisierter Fettsäure zur Herstellung von Schmelzklebern für besondere Zwecke möglich. Bei der Verwendung von technischer dimerer Fettsäure sei nur darauf hingewiesen, daß der Gehalt an trimerer Fettsäure eine maximale Grenze nicht überschreiten sollte. Dieser Grenzwert hängt von dem jeweiligen Gehalt an dimerer und monomerer Fettsäure der polymerisierten Fettsäure ab und kann durch einen orientierenden Versuch, wie er zur handwerklichen Alltagsroutine des Druchschnittsfachmanns gehört, festgestellt werden.

Der Ausdruck dimerisierte Fettsäure bezieht sich in allgemeiner Form auf polymerisierte Säuren, die aus « Fettsäuren » erhalten werden. Der Ausdruck « Fettsäure » umfaßt ungesättigte natürliche und synthetische einbasische aliphatische Säuren mit 12-22 Kohlenstoffatomen, bevorzugt 18 Kohlenstoffatomen. Diese Fettsäuren lassen sich nach bekannten Verfahren polymerisieren (vgl. DE-A 14 43 938, DE-A 14 43 968, DE-C 21 18 702 und DE-C 12 80 852).

Typische im Handel erhältliche polymere Fettsäuren haben etwa folgende Zusammensetzung :

| | |
|---|---|
| monomere Säuren (Mo) | 5-15 Gewichtsprozent |
| dimere Säuren (Di) | 60-80 Gewichtsprozent |
| trimere Säuren (Tri) | 10-35 Gewichtsprozent |

Der Gehalt an dimerer Säure kann durch allgemein bekannte Destillationsverfahren bis zu 100 Gewichtsprozent erhöht werden.

Für die erfindungsgemäß einzusetzenden Polyamide werden bevorzugt dimerisierte Fettsäuren mit einem Gehalt von größer als 90 Gew.-% an dimerer Fettsäure und kleinen Mengen trimerer Fettsäure (Gew.-% 2 bis 6) und monomerer Fettsäure (Gew.-% 0 bis 1,5), wie sie im Handel allgemein erhältlich sind, verwendet. Es ist auch möglich, die dimerisierte Fettsäure in ihrer hydrierten Form einzusetzen.

Die erfindungsgemäß einzusetzenden Polyamide liegen in einem bestimmten Schmelzviskositätsbereich, der einen gewissen Molekulargewichtsbereich wiederspiegelt.

Die Einstellung der Schmelzviskosität kann in bekannter Weise durch Abbruch der Reaktion beim gewünschten Polymerisationsgrad oder durch Arbeiten mit nichtäquivalenten Mengen Carbonsäuren bzw. Aminen erfolgen. Wegen gewisser Nachteile dieser Methoden wird die Verwendung von monofunktionellen bzw. monofunktionell wirkenden Verbindungen (Amine oder Carbonsäuren) als Kettenabbrecher bevorzugt. Als besonders günstig haben sich dabei Monocarbonsäuren erwiesen.

Der eventuelle Anteil an Monocarbonsäuren in der erfindungsgemäß verwendeten polymerisierten Fettsäure kann durch Zusatz von Monocarbonsäuren bis auf 50 Äquivalent-% bezogen auf Gesamtcarboxylgruppen des Gemisches aus polymerer Fettsäure und Monocarbonsäure, erhöht werden. Liegt der Anteil des erforderlichen Kettenabbreches (Viskositätsreglers), hier der Monocarbonsäure, hoch, so werden bevorzugt höhermolekulare Monocarbonsäuren wie Palmitin-, Öl-, Stearin-, Linol-, Linolensäure oder Gemische hiervon wie Tallölfett- oder Soyaölfettsäure oder andere hydrophobe Monocarbonsäuren eingesetzt.

Als kurzkettige Monocarbonsäuren können aliphatische, cycloaliphatische, araliphatische und aromatische Säuren wie z. B. Essigsäure, Propionsäure, Buttersäure, Valeriansäure, Capronsäure, Caprylsäure, Caprinsäure, Isononansäure, Laurinsäure, Cyclohexen-3-Carbonsäure, Diphenolsäure, Benzoesäure eingesetzt werden.

Als Beispiele für die erfindungsgemäß mitverwendeten aliphatischen unverzweigten Co-Dicarbonsäuren mit 6-13 Kohlenstoffatomen seien Adipinsäure, Nonamethylendicarbonsäure, Brassylsäure und insbesondere Dekamethylendicarbonsäure, Azelainsäure und Sebazinsäure genannt.

Anstelle der Carbonsäuren können auch deren Ester mit niedrigen Alkoholen eingesetzt werden. Hierbei empfiehlt es sich, insbesondere wenn der Esteranteil hoch ist, die Caprolaktampolymerisation durch Wasserzusatz zu starten.

Für die erfindungsgemäß verwendbaren aliphatischen unverzweigten diprimären Diamine mit 6 bis 12 Kohlenstoffatomen seien zum Beispiel 1,9 Diaminononan 1,12-Diaminododecan, insbesondere 1,6-Diaminohexan genannt.

Die auf Mole Carboxylgruppen der eingesetzten Säuren bezogene Aminosäure- bzw. Laktammenge richtet sich nach der Höhe des gewünschten Schmelzpunktes. So beträgt sie bei Einsatz der Schmelzkleber als Textilkleber pro Mol Carboxylgruppen der polymerisierten Fettsäure und der Co-Dicarbonsäuren 0,5-1,5, insbesondere 0,8-1,2 Mol.

Der Anteil an 11-Aminoundecansäure und/oder Aminodecansäure und/oder Laurinlaktam kann in Abhängigkeit von Art und Menge der Komponenten a)-d) innerhalb relativ weiter Grenzen variiert werden und richtet sich in erster Linie nach den gewünschten Eigenschaften des Endproduktes. Erfindungsgemäß bevorzugt werden 5-70, insbesondere 10-50, Mol-% des Caprolaktams gemäß d) durch 11-Aminoundecansäure und/oder Aminodecansäure und/oder Laurinlaktam ersetzt.

Die erfindungsgemäß zur Verklebung von Textilien verwendeten Schmelzkleber zeichnen sich neben einer guten Beständigkeit gegen den in der chemischen Reinigung verwendeten Reinigungsmitteln insbesondere durch eine gute Beständigkeit gegenüber Waschlaugen aus. Das gilt sowohl für die niedrigschmelzenden Polyamide, welche aufgrund ihrer niedrigen Schmelzpunktes nicht für Kochwäsche benutzt werden können, als auch für die hochschmelzenden Produkte, welche ihre ausgezeichnete Beständigkeit selbst bei der bislang problematischen Belastung bei hohen Temperaturen, d. h. bei der Kochwäsche bei 95 °C, beibehalten.

Bei den zu verklebenden Materialien handelt es sich um Textilien, gegebenenfalls auch siliconierte Gewebe, die miteinander, gegebenenfalls mit Leder, Gummi und anderen Materialien, verklebt werden können.

Die erfindungsgemäß zu verwendenden Polyamide können durch Schmelzkondensation in im wesentlichen äquivalenten Mengen der oben angegebenen Reaktionspartner bei Temperaturen zwischen 200 und 290 °C, insbesondere bei 250 °C, unter Inertgas hergestellt werden. In der letzten Phase der Reaktion ist ein Vakuum zur Erzielung einwandfreier Produkte angebracht. Die Schmelzviskosität der erfindungsgemäß einzusetzenden Polyamide soll im allgemeinen zwischen 25 und 150 Pa · s, gemessen bei 220 °C, liegen.

Bestimmung des Schmelzpunktes

Die Ermittlung des Wertes wird mit einem Schmelzmikroskop in der in der Praxis üblichen Weise vorgenommen.

4

**0 045 383**

### Herstellung der Verklebungen

Verklebt werden Stoffstreifen aus Polyester/Wolle (55 %/45 %) von 5 cm Breite. Das Polyamidpulver weist eine Körnung von 300-500 μ auf. Die Auftragsmenge beträgt 20 g/m² Stoff.

Die beschichteten Stoffstreifen werden bei Temperaturen von ca. 20 °C-30 °C oberhalb des Erweichungspunktes des Polyamidklebers mit einem zweiten unbeschichteten Stoffstreifen verklebt. Die Verklebungszeit beträgt ca. 15-20 Sekunden, der Verklebungsdruck 400 g/cm².

### Wasch- und Reinigungsprozeß

1. Gewaschen wird mit einer 3 %igen Waschlauge eines handelsüblichen Maschinenwaschmittels bei Temperaturen von - 60 °C und 95 °C. Der Waschvorgang bei 60 °C dauert 45 Minuten, bei 95 °C 90 Minuten. Die Waschprogramme schließen einen Spül- und Schleudervorgang ein.

Die chemische Reinigung erfolgt mit Perchloräthylen während 30 Minuten bei Raumtemperatur.

2. Lagerung : 48 h bei Normalklima.

3. Wasch- oder Reinigungsvorgang.

4. Trocknung : 24 h bei Normalklima.

5. Des Wasch- oder Reinigungsvorgang wird insgesamt. 5 × wiederholt. Vor jedem erneuten Belastungsvorgang erfolgt die vollständige Trocknung der Probe durch 24 stündige Lagerung bei Normalklima.

6. Unmittelbar nach dem 5. Wasch- oder Reinigungsdurchgang erfolgt bei Raumtemperatur die Trennfestigkeitsprüfung an der noch feuchten Stoffprobe in Anlehnung an die DIN 53 357.

Bei den in den nachfolgenden Beispielen aufgeführten Polyamiden wurde folgende polymerisierte Fettsäure verwandt :

Polymerisierte destillierte Tallölfettsäure folgender Zusammensetzung :

| | |
|---|---|
| Monomere Fettsäure | 2,7 % |
| Dimere Fettsäure | 94,1 % |
| Trimere und höherpolymere Fettsäure | 3,2 % |

### Beispiel 1

In einem mit absteigendem Kühler, Rührer und Thermometer versehenen Reaktor wurden 25,35 g destillierte dimere Tallölfettsäure, 13,65 g Stearinsäure, 138,30 g Sebacinsäure (Verhältnis der Carboxylgruppen gemäß a : b = 0,1 : 1,0), 87,5 g 1,6-Diaminohexan, 153,04 g Caprolaktam (0,9 Mol/Mol Carboxyl) und 32,35 g 11-Aminoundecansäure (0,1 Mol/Mol Carboxyl) eingewogen und unter Stickstoff innerhalb 2 Stunden auf 250 °C erhitzt und 7 Stunden auf dieser Temperatur gehalten.

Während der letzten 4 Stunden wurde ein Vakuum von 2 mm Hg-Säule angelegt.

Das erhaltene Polyamide wies folgende Werte auf :

Schmelzpunkt 133 °C
Schmelzviskosität bei 220 °C 98,0 Pa · s
Naßreißfestigkeit nach 5 Wäschen :
   bei 60 °C : 5,5 kp/5 cm
   bei 95 °C : 5,0 kp/5 cm
Naßreißfestigkeit nach 5 Reinigungen in Perchloräthylen : 7,0 kp/5 cm.

Die in Tabelle 1 und 2 aufgeführten Polyamide wurden in analoger Weise erhalten.

(Siehe Tabellen Seite 6 ff.)

## Tabelle 1 — Beispiele für Polyamidtextilkleber mit Schmelzpunkten ≥ 120 °C

| Beispiel | dimere Fettsäure | Ketten-abbrecher | Co-Dicar-bonsäure | Verhältnis der Fettsäuren zu Co-Dicarbon-säuren, bezogen auf Carboxyl-gruppen | Capro-laktam | Aminosäure | Mol Ca-prolak-tam/Mol Carboxyl-Gruppen | Mol Amino-säure/ Mol Car-boxylgr. | 1,6-Dia-minohexan | Mikro-skop-schmelz-punkt | Viskosität bei 220 °C | Naßreißfestigkeiten (Kp/5 cm) Wäsche 5 × 60 °C | 95 °C | Reini-gung in Perchlor-äthylen 5 × (RT) |
|---|---|---|---|---|---|---|---|---|---|---|---|---|---|---|
| 2 | 21,21 g dest. polym. Taölfetts. | 14,13 g Stearins. | 125,33 g Sebacinsäure | 0,10 : 1,00 | 77,06 g | 146,43 g 11-Aminoun-decansäure | 0,50 | 0,50 | 79,29 g | 125 °C | 64,0 Pa.s | 6,0 | 5,0 | 6,0 |
| 3 | 67,37 g dest. polym. Taölfetts. | 13,00 g Stearins. | 114,04 g Sebacinsäure | 0,25 : 1,00 | 143,40 g | 30,32 g 11-Aminoun-decansäure | 0,9 | 0,1 | 82,15 g | 121 °C | 79,0 Pa.s | 6,5 | 5,0 | 7,0 |
| 4 | 57,52 g dest. polym. Taölfetts. | 15,30 g Stearins. | 103,32 g Sebacinsäure | 0,25 : 1,00 | 72,18 g | 137,33 g 11-Aminoun-decansäure | 0,5 | 0,50 | 74,28 g | 120 °C | 94,5 Pa.s | 7,0 | 6,0 | 5,5 |
| 5 | 113,10 g dest. polym. Taölfetts. | 11,20 g Stearins. | 100,1 g C-12-Säure* | 0,909 : 1,00 | 133,0 g | 25,8 g 12-Aminodo-decansäure | 0,9 | 0,1 | 75,95 g | 128 °C | 65,0 Pa.s | 4,7 | 3,5 | 4,2 |
| 6 | 70,00 g dest. polym. Taölfetts. | 10,40 g Stearins. | 114,00 g Sebacinsäure | 0,25 : 1,00 | 143,5 g | 13,9 g Laurinlaktam 14,2 g 11-Aminodo-decansäure | 0,9 | 0,05 Laurin-laktam 0,25 11-Ami-nodode-cansäure | 82,00 g | 126 °C | 94,5 Pa.s | 4,0 | — | 4,0 |
| 7 | 24,60 g dest. polym. Taölfetts. | 10,00 g Stearins. | 115,00 g Azelainsäure | 0,1 : 1,00 | 75,45 g | 65,7 g Laurinlaktam 67,1 g 11-Aminodo-decansäure | 0,5 | 0,25 Laurin-laktam 0,25 11-Ami-nodode-cansäure | 77,60 g | 133 °C | 72,5 Pa.s | 4,5 | — | 3,8 |

Handelsprodukte auf Basis von Aminocarbonsäuren ohne Mitverwendung von dimerer Fettsäure

| | | | | | | | | | | | | | |
|---|---|---|---|---|---|---|---|---|---|---|---|---|---|
| A | — | — | — | — | — | — | — | — | — | 123 °C | — | — | 3,5 | — |
| B | — | — | — | — | — | — | — | — | — | 120 °C | — | — | 4,0 | — |

*) = C-12-Säure : 1,10-Dekamethylendicarbonsäure

0 045 383

Tabelle 2 — Beispiele für Polyamidtextilkleber mit Schmelzpunkten < 120 °C

| Bei-spiel | dimere Fettsäure | Ketten-abbrecher | Co-Dicar-bonsäure | Verhältnis der Fettsäuren zu Co-Dicarbon-säuren, bezogen auf Carboxyl-gruppen | Capro-laktam | Aminosäure | Mol Ca-prolak-tam/Mol Carboxyl-Gruppen | Mol Amino-säure/ Mol Car-boxylgr. | 1,6-Dia-minohexan | Mikro-skop-schmelz-punkt | Viskosität bei 220 °C | Naßreißfestigkeiten (Kp/5 cm) Wäsche 5× 60 °C | 95 °C | Reini-gung in Perchlor-äthylen 5 × (RT) |
|---|---|---|---|---|---|---|---|---|---|---|---|---|---|---|
| 8 | 113,08 dest. polym. Tallölfetts. | 11,18 g Stearins. | 88,16 g Sebacinsäure | 0,50 : 1,00 | 133,02 g | 28,12 g 11-Amino-undecansäure | 0,9 | 0,1 | 76,06 g | 117 °C | 86,0 Pa . s | 6,5 | 3,5 | 5,5 |
| 9 | 26,52 g dest. polym. Tallölfetts. | 12,48 g Stearins. | 129,61 g Acelainsäure | 0,10 : 1,00 | 153,04 g | 32,35 g 11-Amino-undecansäure | 0,9 | 0,1 | 87,50 g | 113 °C | 97,0 Pa . s | 7,0 | — | 7,0 |
| 10 | 101,13 g dest. polym. Tallölfetts. | 12,50 g Stearins. | 80,62 g Sebacinsäure | 0,50 : 1,00 | 67,58 g | 128,58 g 11-Amino-undecansäure | 0,5 | 0,5 | 69,55 g | 112 °C | 77,0 Pa . s | 7,0 | — | 5,0 |
| 11 | 19,28 g dest. polym. Tallölfetts. | 15,78 g Stearins. | 116,54 g Acelainsäure | 0,10 : 1,00 | 76,44 g | 145,45 g 11-Amino-undecansäure | 0,5 | 0,5 | 78,68 g | 95 °C | 103,5 Pa . s | 4,5 | — | 7,0 |
| 12 | 60,42 g dest. polym. Tallölfetts. | 17,10 g Stearins. | 100,44 g Acelainsäure | 0,25 : 1,00 | 74,86 g | 133,16 g 11-Amino-undecansäure | 0,5 | 0,5 | 77,01 g | 91 °C | 51,5 Pa . s | 5,0 | — | 4,0 |
| 13 | 101,66 g dest. polym. Tallölfetts. | 15,19 g Stearins. | 77,70 g Acelainsäure | 0,50 : 1,00 | 69,49 g | 123,61 g 11-Amino-undecansäure | 0,5 | 0,5 | 71,49 g | 85 °C | 57,5 Pa . s | 5,0 | — | 3,0 |
| 14 | 68,3 g dest. polym. Tallölfetts. | 12,1 g Stearins. | 65,0 g C-12-säure * 57,0 Sebacin-säure | 0,25 : 1,00 | 151,4 g | 13,9 g Laurinlaktam | 0,95 | 0,05 | 84,99 g | 109 °C | 66,0 Pa . s | 3,2 | — | 3,2 |
| 15 | 115,3 g dest. polym. Tallölfetts. | 9,0 g Stearins. | 50,0 g C-12-Säure * 41,35 g Aze-lainsäure | 0,50 : 1,00 | 133,0 g | 25,8 g Laurin-laktam | 0,9 | 0,1 | 75,95 g | 103 °C | 72,0 Pa . s | 3,5 | — | 2,5 |

0 045 383

(Fortsetzung)

## Tabelle 2 — Beispiele für Polyamidtextilkleber mit Schmelzpunkten < 120

| Bei-spiel | dimere Fettsäure | Ketten-abbrecher | Co-Dicar-bonsäure | Verhältnis der Fettsäuren zu Co-Dicarbon-säuren, bezogen auf Carboxyl-gruppen | Capro-laktam | Aminosäure | Mol Ca-prolak-tam/Mol Carboxyl-Gruppen | Mol Amino-säure/ Mol Car-boxylgr. | 1,6-Dia-minohexan | Mikro-skop-schmelz-punkt | Viskosität bei 220 °C | Naßreißfestigkeiten (Kp/5 cm) Wäsche 5 × 60 °C | 95 °C | Reini-gung in Perchlor-äthylen 5 × (RT) |
|---|---|---|---|---|---|---|---|---|---|---|---|---|---|---|
| 16 | 115,3 g dest. polym. Tallölfetts. | 9,0 g Stearins. | 50,0 g C-12-Säure * 41,35 g Aze-lainsäure | 0,50 : 1,00 | 133,0 g | 28,16 g 12-Aminododecan-säure | 0,9 | 0,1 | 75,95 g | 104 °C | 66,0 Pa . s | 3,0 | — | 2,8 |
| 17 | 115,3 g dest. polym. Tallölfetts. | 9,0 g Stearins. | 50,0 g C-12-Säure * 44,1 Sebazin-säure | 0,50 : 1,00 | 133,0 g | 25,8 g 12-Aminododecan-säure | 0,9 | 0,1 | 75,95 g | 102 °C | 71,5 Pa . s | 3,0 | — | 3,0 |
| 18 | 68,3 g dest. polym. Tallölfetts. | 12,1 g Stearins. | 57,0 g Seba-zinsäure 53,5 g Aze-lainsäure | 0,25 : 1,00 | 151,4 g | 15,2 g 11-Amino-undekansäure | 0,95 | 0,05 | 80,10 g | 113 °C | 99,5 Pa . s | 4,0 | — | 4,2 |
| 19 | 68,3 g dest. polym. Tallölfetts. | 12,1 g Stearins. | 57,0 g Seba-zinsäure 53,5 g Aze-lainsäure | 0,25 : 1,00 | 151,4 g | 14,6 g Laurin-laktam | 0,95 | 0,05 | 80,10 g | 118 °C | 73,5 Pa . s | 3,8 | — | 4,8 |
| Handelsprodukte auf Basis von Aminocarbonsäuren ohne Mitverwendung von diemerer Fettsäure | | | | | | | | | | | | | | |
| C | — | — | — | — | — | — | — | — | — | 118 °C | — | 5,0 | — | — |
| D | — | — | — | — | — | — | — | — | — | 83 °C | — | 2,6 | — | — |

*) = C-12-Säure : 1,10-Dekamethylendicarbonsäure

0 045 383

# 0 045 383

**Ansprüche** (für die Vertragsstaaten : BE, CH, DE, FR, GB, IT, LI, LU, NL)

1. Verwendung von Polyamiden mit Schmelzviskositäten (gemessen bei 220 °C) von 25 bis 150 Pa . s, welche hergestellt werden aus :

a) dimerisierter Fettsäure mit einem Gehalt von 70 Gew.-% bis 100 Gew.-% an dimerer Fettsäure mit Monocarbonsäuren, die 2-22 Kohlenstoffatome aufweisen, wobei das Gesamtgemisch bis zu 50 Äquiv.-% an den Monocarbonsäuren betragen kann, und
b) mindestens einer aliphatischen unverzweigten Co-Dicarbonsäure mit 6-13 Kohlenstoffatomen,

wobei das Verhältnis der Carbonsäuren gemäß a) zu Carbonsäure gemäß b) 0,05 : 1 bis 5 : 1, bezogen auf Carboxylgruppen, beträgt, und bestehend aus einer der unter a) und b) genannten Säuren im wesentlichen äquivalenten Menge eines

c) aliphatischen unverzweigten Diamins mit 6-12 Kohlenstoffatomen und aus

d) Caprolaktam und/oder ε-Aminocapronsäure,

wobei pro Mol Carboxylgruppen der unter a) und b) genannten Säuren 0,5 bis 1,5 Mol Caprolaktam und bzw. oder ε-Aminocapronsäure eingesetzt werden, dadurch gekennzeichnet, daß 5 bis 70 Mol-% des Caprolaktams und/oder der ε-Aminocapronsäure gemäß d) durch 11-Aminoundecansäure und/oder 12-Aminododecansäure und/oder Laurinlaktam ersetzt werden, für die Verklebung von Textilien.

2. Verwendung von Polyamiden gemäß Anspruch 1, dadurch gekennzeichnet, daß das Verhältnis der Carbonsäuren gemäß a) zu den Carbonsäuren gemäß b) 0,1 : 1 bis 1 : 1 beträgt.

3. Verwendung von Polyamiden gemäß Anspruch 1 und 2, dadurch gekennzeichnet, daß als Codicarbonsäuren Sebazinsäure und/oder Azelainsäure verwendet werden.

4. Verwendung von Polyamiden gemäß Anspruch 1 bis 3, dadurch gekennzeichnet, daß als Diamin Hexamethylendiamin verwendet wird.

5. Verwendung von Polyamiden gemäß Anspruch 1 bis 4, dadurch gekennzeichnet, daß als dimerisierte Fettsäure gemäß a) eine solche mit einem Gehalt von mehr als 90 Gew.-% dimerer Fettsäure verwendet wird.

**Ansprüche** (für den Vertragsstaat AT)

1. Verfahren zum Verkleben von Textilien unter an sich bekannten Bedingungen mit Polyamiden mit Schmelzviskositäten (gemessen bei 220 °C) von 25 bis 150 Pa . s, welche hergestellt werden aus :

a) dimerisierter Fettsäure mit einem Gehalt von 70 Gew.-% bis 100 Gew.-% an dimerer Fettsäure mit Monocarbonsäuren, die 2-22 Kohlenstoffatome aufweisen, wobei das Gesamtgemisch bis zu 50 Äquiv.-% an den Monocarbonsäuren betragen kann, und
b) mindestens einer aliphatischen unverzweigten Co-Dicarbonsäure mit 6-13 Kohlenstoffatomen,

wobei das Verhältnis der Carbonsäuren gemäß a) zu Carbonsäure gemäß b) 0,05 : 1 bis 5 : 1, bezogen auf Carboxylgruppen, beträgt, und bestehend aus einer der unter a) und b) genannten Säuren im wesentlichen äquivalenten Menge eines

c) aliphatischen unverzweigten Diamins mit 6-12 Kohlenstoffatomen und aus
d) Caprolaktam und/oder ε-Aminocapronsäure,

wobei pro Mol Carboxylgruppen der unter a) und b) genannten Säuren 0,5 bis 1,5 Mol Caprolaktam und bzw. oder ε-Aminocapronsäure eingesetzt werden, dadurch gekennzeichnet, daß 5 bis 70 Mol-% des Caprolaktams und/oder der ε-Aminocapronsäure gemäß d) durch 11-Aminoundecansäure und/oder 12-Aminododecansäure und/oder Laurinlaktam ersetzt werden.

2. Verfahren gemäß Anspruch 1, dadurch gekennzeichnet, daß in den Polyamiden das Verhältnis der Carbonsäuren gemäß a) zu den Carbonsäuren gemäß b) 0,1 : 1 bis 1 : 1 beträgt.

3. Verfahren gemäß Anspruch 1 und 2, dadurch gekennzeichnet, daß in den Polyamiden als Codicarbonsäuren Sebazinsäure und/oder Azelainsäure verwendet werden.

4. Verfahren gemäß Anspruch 1 bis 3, dadurch gekennzeichnet, daß in den Polyamiden als Diamin Hexamethylendiamin verwendet wird.

5. Verfahren gemäß Anspruch 1 bis 4, dadurch gekennzeichnet, daß in den Polyamiden als dimerisierte Fettsäure gemäß a) eine solche mit einem Gehalt von mehr als 90 Gew.-% dimerer Fettsäure verwendet wird.

**0 045 383**

Claims (for the Contracting States : BE, CH. DE, FR, GB, IT, LI, LU, NL)

1. Use of polyamides having melt viscosities (measured at 220 °C) of from 25 to 150 Pa · s, which are manufactured from :

a) dimerised fatty acid containing from 70 % by weight to 100 % by weight of dimeric fatty acid with monocarboxylic acids having from 2 to 22 carbon atoms, it being possible for the total mixture to comprise up to 50 equivalents per cent of the monocarboxylic acids, and
   b) at least one aliphatic unbranched co-dicarboxylic acid having from 6 to 13 carbon atoms,

the ratio of the carboxylic acids according to a) to the carboxylic acid according to b) being from 0.05 : 1 to 5 : 1, based on carboxy groups and which comprise an amount, substantially equivalent to the acids mentioned under a) and b), of

c) an aliphatic unbranched diamine having from 6 to 12 carbon atoms and

d) caprolactam and/or ε-aminocaproic acid,

from 0.5 to 1.5 mol of caprolactam and/or ε-aminocaproic acid being used per mol of carboxy groups of the acids mentioned under a) and b), characterised in that from 5 to 70 mol % of the caprolactam and/or the ε-aminocaproic acid according to d) being replaced by 11-aminoundecanoic acid and/or 12-aminododecanoic acid and/or laurinlactam, for bonding textiles.

2. Use of polyamides according to claim 1, characterised in that the ratio of the carboxylic acids according to a) to the carboxylic acids according to b) is from 0.1 : 1 to 1 : 1.

3. Use of polyamides according to claims 1 and 2, characterised in that sebacic acid and/or azelaic acid is/are used as the co-dicarboxylic acid(s).

4. Use of polyamides according to claims 1 to 3, characterised in that hexamethylenediamine is used as the diamine.

5. Use of polyamides according to claims 1 to 4, characterised in that a dimerised fatty acid containing more than 90 % by weight of dimeric fatty acid is used as the dimerised fatty acid according to a).

**Claims** (for the Contracting State AT)

1. Method of adhering textiles using polyamides having melt viscosities (measured at 220 °C) of from 25 to 150 Pa . s, which are manufactured from :

a) dimerised fatty acid containing from 70 % by weight to 100 % by weight of dimeric fatty acid with monocarboxylic acids having from 2 to 22 carbon atoms, it being possible for the total mixture to comprise up to 50 equivalents per cent of the monocarboxylic acids, and
   b) at least one aliphatic unbranched co-dicarboxylic acid having from 6 to 13 carbon atoms,

the ratio of the carboxylic acids according to a) to the carboxylic acid according to b) being from 0.05 : 1 to 5 : 1, based on carboxy groups and which comprise an amount, substantially equivalent to the acids mentioned under a) and b), of

c) an aliphatic unbranched diamine having from 6 to 12 carbon atoms and
   d) caprolactam and/or ε-aminocaproic acid,

from 0.5 to 1.5 mol of caprolactam and/or ε-aminocaproic acid being used per mol of carboxy groups of the acids mentioned under a) and b), characterised in that from 5 to 70 mol % of the caprolactam and/or the ε-aminocaproic acid according to d) being replaced by 11-aminoundecanoic acid and/or 12-aminododecanoic acid and/or laurinlactam, for bonding textiles.

2. Method of adhering textiles according to claim 1, characterised in that the ratio of the carboxylic acids according to a) to the carboxylic acids according to b) is from 0.1 : 1 to 1 : 1.

3. Method of adhering textiles according to claims 1 and 2, characterised in that sebacic acid and/or azelaic acid is/are used as the co-cicarboxylic acid(s).

4. Method of adhering textiles according to claims 1 to 3, characterised in that hexamethylenediamine is used as the diamine.

5. Method of adhering textiles according to claims 1 to 4, characterised in that a dimerised fatty acid containing more than 90 % by weight of dimeric fatty acid is used as the dimerised fatty acid according to a).

**0 045 383**

**Revendications** (pour les Etats Contractants : BE, CH, DE, FR, GB, IT, LI, LU, NL)

1. Application, pour le collage de textiles, de polyamides, ayant des viscosités à l'état fondu (mesurées à 220 °C) de 25 à 150 Pa . s, qui sont préparés à partir :

a) d'un acide gras dimérisé ayant une teneur de 70 % en poids à 100 % en poids d'un acide gras dimère, avec des acides monocarboxyliques possédant 2-22 atomes de carbone, le mélange total pouvant comporter jusqu'à 50 %-équivalents des acides monocarboxyliques, et
b) d'au moins un coacide dicarboxylique aliphatique non-ramifié à 6-13 atomes de carbone,

le rapport des acides carboxyliques selon a) à l'acide carboxylique selon b) étant de 0,05 : 1 à 5 : 1, par rapport aux groupes carboxyle, et se composant d'une quantité, essentiellement équivalente aux acides désignés en a) et b),

c) d'une diamine aliphatique non-ramifiée à 6-12 atomes de carbone et

d) de caprolactame et/ou d'acide ε-aminohexanoïque,

0,5 à 1,5 mole de caprolactame et/ou d'acide ε-aminohexanoïque étant utilisés par mole de groupes carboxyle des acides désignés en a) et b), application caractérisée en ce que 5 à 70 % en moles du caprolactame et/ou de l'acide ε-aminohexanoïque selon d) sont remplacés par de l'acide amino-11 undécanoïque et/ou de l'acide amino-12 dodécanoïque et/ou du laurolactame.

2. Application de polyamides selon la revendication 1, caractérisée en ce que le rapport des acides carboxyliques selon a) aux acides carboxyliques selon b) est de 0,1 : 1 à 1 : 1.

3. Application de polyamides selon l'une quelconque des revendications 1 ou 2, caractérisée en ce que l'on utilise en tant que coacides dicarboxyliques l'acide sébacique et/ou l'acide azélaïque.

4. Application de polyamides selon l'une quelconque des revendications 1 à 3, caractérisée en ce que l'on utilise en tant que diamine l'hexaméthylènediamine.

5. Application de polyamides selon l'une quelconque des revendications 1 à 4, caractérisée en ce que l'on utilise en tant qu'acide gras dimérisé selon a) un tel acide ayant une teneur supérieure à 90 % en poids en l'acide gras dimère.


**Revendications** (pour l'Etat Contractant AT)

1. Procédé de collage de textiles avec des polyamides, d'ayant des viscosités à l'état fondu (mesurées à 220 °C ) de 25 à 150 Pa . s, qui sont préparés à partir :

a) d'un acide gras dimérisé ayant une teneur de 70 % en poids à 100 % en poids d'un acide gras dimère, avec des acides monocarboxyliques possédant 2-22 atomes de carbone, le mélange total pouvant comporter jusqu'à 50 %-équivalents des acides monocarboxyliques, et
b) d'au moins un coacide dicarboxylique aliphatique non-ramifié à 6-13 atomes de carbone,

le rapport des acides carboxyliques selon a) à l'acide carboxylique selon b) étant de 0,05 : 1 à 5 : 1, par rapport aux groupes carboxyle, et se composant d'une quantité, essentiellement équivalente aux acides désignés en a) et b),

c) d'une diamine aliphatique non-ramifiée à 6-12 atomes de carbone et
d) de caprolactame et/ou d'acide ε-aminohexanoïque,

0,5 à 1,5 mole de caprolactame et/ou d'acide ε-aminohexanoïque étant utilisés par mole de groupes carboxyle des acides désignés en a) et b), application caractérisée en ce que 5 à 70 % en moles du caprolactame et/ou de l'acide ε-aminohexanoïque selon d) sont remplacés par de l'acide amino-11 undécanoïque et/ou de l'acide amino-12 dodécanoïque et/ou du laurolactame.

2. Procédé des polyamides selon la revendication 1, caractérisée en ce que le rapport des acides carboxyliques selon a) aux acides carboxyliques selon b) est de 0,1 : 1 à 1 : 1.

3. Procédé des polyamides selon l'une quelconque des revendications 1 ou 2, caractérisée en ce que l'on utilise en tant que coacides dicarboxyliques l'acide sébacique et/ou l'acide azélaïque.

4. Procédé des polyamides selon l'une quelconque des revendications 1 à 3, caractérisée en ce que l'on utilise en tant que diamine l'hexaméthylènediamine.

5. Procédé des polyamides selon l'une quelconque des revendications 1 à 4, caractérisée en ce que l'on utilise en tant qu'acide gras dimérisé selon a) un tel acide ayant une teneur supérieure à 90 % en poids en l'acide gras dimère.

11